# EUROPEAN PATENT APPLICATION

(11) **EP 2 017 768 A1**
(43) Date of publication of application: **21.01.2009**
(21) Application number: 07111164.5
(22) Date of filing: 27.06.2007
(51) Int. Cl.: G06K 7/08, H01Q 1/22

(54) **System and method for sensing an RFID tag**

(71) Applicant: Koninklijke Philips Electronics N.V., 5621 BA Eindhoven (NL)
(72) Inventor: The designation of the inventor has not yet been filed
(74) Representative: Ledeboer, Johannes Albertus

(57) **Abstract**

The invention relates to a system for sensing an RFID tag (2a) allocated to at least one scanning position (Pij) comprising RF sensors (1A-1H), at least one which RF sensors (1A-1H) is in a detection state for detecting the RFID tag (2a) within sensing regions while the other RF sensors (1A-1H) are in a passive state, which sensing regions are arranged such that each of the sensing regions covers at least one scanning position (Pij), wherein the RF sensor (1A-1H) in the detection state transmits a first RF signal at a first frequency and the other RF sensors (1A-1H) in the passive state are resonating at a second frequency that is different from the first frequency. In this way the cross-talk or mutual influence between the RF sensor (1A-1H) that is in the active state and the RF sensor or sensors (1A-1H) that are in the passive state is substantially reduced.

## Description

### FIELD OF THE INVENTION

The invention relates to a system and method for sensing an RFID (RadioFrequency Identification) tag allocated to scanning positions.

### BACKGROUND OF THE INVENTION

Sensing systems that comprise sensors with sensing regions are commonly known, wherein the sensing regions of these sensors are arranged in a row-column configuration. For instance, objects with built-in RFID tags can be cheaply localized in specific positions on a shelf or at specific terminals of a robotic delivery system, which shelves or terminals are swept by an arrangement of antennas configured in rows and columns. Each specific position is defined by the intersection of one row antenna with one column antenna.

A disadvantage of the known method of sensing an RFID tag is that there is substantial cross-talk between the antenna loops which prevents RFID tags to resonate properly. US2001/0035815 discloses a method of monitoring the position and/or physical characteristics of an RFID tag comprising the production of an interrogation signal in an array of sensing elements and sensing the interaction of that signal with RFID tags that are present on the surface of the sensing elements. In order to avoid interference between multiple proximate RFID tags it is proposed to have each of them operating at a different frequency whereby a sweep generator repeatedly varies the RF signal frequency through a band sufficient to cover the operating frequencies of all possible RFID tags. A disadvantage of this method is the need for RFID tags with different operating frequencies and for a sweep generator, all of which increases the costs and the time to detect the RFID tags.

### SUMMARY OF THE INVENTION

It is an object of the invention to provide a system for sensing an RFID tag allocated to scanning positions in which the cross-talk between sensing regions is reduced. The invention is defined by the independent claims. Advantageous embodiments are defined by the dependent claims.

This object is achieved by a system for sensing an RFID tag allocated to at least one scanning position comprising RF sensors, at least one of which RF sensors is in a detection state for detecting the RFID tag within sensing regions while the other RF sensors are in a passive state, which sensing regions are arranged such that each of the sensing regions covers at least one scanning position, wherein the RF sensor in the detection state transmits a first RF signal at a first frequency and the other RF sensors in the passive state are resonating at a second frequency that is different from the first frequency. By bringing the RF sensor or RF sensors that are in the passive state into resonance at the second frequency, which is different from the first frequency, the cross-talk or mutual influence between the RF sensor that is in the active state and the RF sensor or sensors that are in the passive state is substantially reduced. The reduced influence of the passive RF sensors, that are in the passive state and hence not used to detect the RFID tag, on the active RF sensor in the detection state, that is used to detect the RFID tag, enables the detection of the RFID tag by the active RF sensor in a more efficient way. In an embodiment of the system for sensing an RFID tag according to the invention the second frequency is at least a factor two lower than the first frequency.

In an embodiment of the system for sensing an RFID tag according to the invention the sensing regions are superposed on one another in at least one scanning position such that each scanning position is scanned by a unique pattern of sensing regions. This is beneficial for the accurate determination of the location of the RFID tag allocated to the scanning position, and, although superposing the sensing regions normally increases the cross-talk between the RF sensors, the invention provides for a reduced cross-talk between the RF sensors thereby improving the detection of the position of the RFID tag also in the embodiment in which the sensing regions are superposed.

In an embodiment of the system for sensing an RFID tag according to the invention at least two distant RF sensors are set to the detection state. This improves the speed of detecting of the RFID tag allocated to the scanning position approximately by a factor of two, because two distant RF sensors are in the detection state at the same time. The distance between these RF sensors is such that the mutual influence or cross-talk between these two distant RF sensors is negligible.

In an embodiment of the system for sensing an RFID tag according to the invention the RF sensors are configured as antennas designed for reading identity codes of the RFID tags. This provides for a multiple of different RFID tags to be detected. Each RFID tag may be unique, characterized by its identity code, and the position of each RFID tag can be uniquely detected. Furthermore, this provides for a highly flexible sensing system at low production cost, since antennas for RFID tags can be produced cheaply with arbitrary shapes and aspect ratios, so that varying shapes of scanning positions can be sensed with one sensing system according to the invention, offering the possibility to adapt the system to almost any conceivable needs without appreciable extra cost. For example, the antennas may be formed by bending of wires or by applying electrically conductive pastes or inks onto a carrier.

In an embodiment of the system for sensing an RFID tag according to the invention a detection signal from the RF sensor, that is in the detection state, is transmitted to a detector that is adapted to allocate each detection signal to a different digit of a position code. These measures provide the advantage that the result of the sensing operation is a position code that uniquely defines that scanning position where the RFID tag was sensed, or that scanning position where the RFID tag was not sensed (=negative sensing). The detector applies a predefined criterion in discriminating whether the detection signal is to be interpreted as "sensed" or "not-sensed", and enters the binary result into each of the digits of the position code. Examples of suitable criterions are a defined threshold being exceeded or a sensed identity code matching a predefined identity code. Because the detector of the present sensing system is adapted to allocate the detection signal as a discrete number to the respective digits of the position code, a wider variety of RF sensors can be used in embodiments of the invention, comprising not only digital RF sensors that deliver a binary TRUE/FALSE result of their sensing, but also analog RF sensors whose analog sensing signals are converted by the detector into discrete numbers which are entered into the respective digits of the position codes, so that the sensing result can be evaluated with high resolution.

In an embodiment of the system for sensing an RF ID tag according to the invention the first RF signal and the second RF signal are provided by a multiplexer and the detection signal is transmitted to the multiplexer and the output of the multiplexer is transmitted to the detector. This reduces the amount of wiring of the sensing system considerably, and the RF sensors may thus very well be located away from the detector.

In an embodiment of the system for sensing an RFID tag according to the invention the first frequency is tunable. The first, tunable frequency provides for an optimal detection of the RFID tag in which the frequency of the active RF sensor, being in the detection state, can be tuned to detect the RFID tag in the most efficient and accurate way. In a preferred embodiment the first, tunable frequency is around 13.56 MHz and the second frequency is about 3.6 MHz.

The object is also achieved by the method for sensing an RFID tag allocated to at least one scanning position, the method comprising the steps of:
- providing sensing regions arranged such that each of the sensing regions covers at least one scanning position;
- providing RF sensors;
- setting at least one RF sensor in a detection state for detecting the RFID tag within the sensing regions;
- setting the other RF sensors in a passive state;
- repeating the step of setting at least one RF sensor in the detection state for each RF sensor while the other RF sensors are set to the passive state;
wherein the RF sensor in the detection state transmits a first RF signal at a first frequency and the other RF sensors that are in the passive state are brought into resonance at a second frequency that is different from the first frequency.

### BRIEF DESCRIPTION OF THE DRAWINGS

These and other aspects of the invention will be further elucidated and described with reference to the drawings, in which:
Fig. 1 is a schematic view of a sensing area with sixteen scanning positions according to an embodiment of the invention; and
Fig. 2 is a schematic view of a system for sensing an RFID tag according to an embodiment of the invention.

The Figures are not drawn to scale. In general, identical components are denoted by the same reference numerals in the Figures.

### DETAILED DESCRIPTION OF EMBODIMENTS

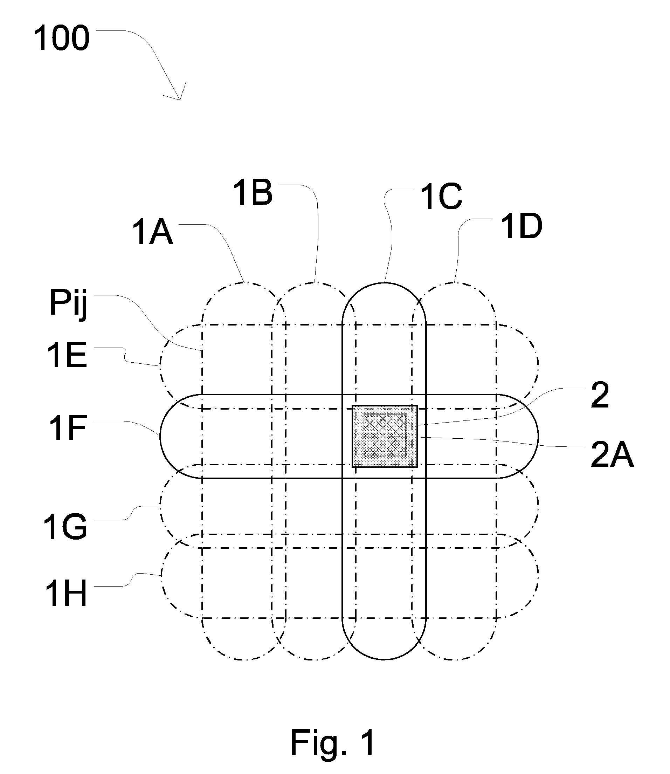

Fig. 1 shows a schematic view of a sensing area 100 with sixteen scanning positions Pij, in which i represents the column number and j the row number, arranged in a 4 x 4 matrix. A token 2 with a built-in RFID tag 2A is placed in one of these scanning positions Pij. The scanning positions Pij of the sensing area 100 are scanned by four antenna sensors 1A - 1D arranged adjacent to each other in a column configuration and by four antenna sensors 1E - 1H arranged adjacent to each other in a row configuration. In this way the antenna sensors 1A - 1H define sensing regions with the sensing area 100 that correspond to the scanning positions Pij. Other more efficient scanning arrangements are known in the art. For example, WO 2006/109211 discloses a scanning arrangement in which the number of sensors to unambiguously sense and localize an RFID tag in scanning positions is considerably reduced with respect to the example of Fig. 1 and in which the sensing regions do not coincide with the scanning positions. For the purpose of the invention, it is irrelevant what kind of scanning process is used.

An example of a known scanning process for the sensing area 100 is explained now. First, all columns i are scanned by successively activating antenna sensors 1A to 1D, querying whether one or more of the antenna sensors 1A to 1D, corresponding to the first to fourth column, receives a detection signal from the RFID tag 2a. In this example only antenna 1C, which scans the third column, receives a signal from RFID tag 2a. Next, all rows j are scanned by successively activating antenna sensors 1E to 1H, corresponding to the first to fourth row, querying whether one or more of these antenna sensors 1E to 1H receive a detection signal from the RFID tag 2a. In this example only antenna sensor IF, which scans the second row, receives a signal from RFID tag 2a. The scanning position where the token 2 is present has thus been determined as being the scanning position P32 corresponding to the third column, which is represented by antenna sensor 1C, and the second row, which is represented by antenna sensor 1F. As will be recognized, in this example eight scanning steps were necessary to achieve this result.

An activated antenna sensor 1A - 1H radiates a radio frequency (RF) signal at an operating frequency of the RFID tag 2a. This RF signal is received by an internal antenna of the RFID tag 2a where it, in case of a passive RFID tag 2a, provides for the power of the RFID tag 2a. The RFID tag 2a subsequently transmits a response signal which is received by the activated antenna sensor 1A - 1H and converted to the detection signal by which it is derived that the token 2 is present in the area covered by the activated antenna sensor 1A - 1H. The response signal of the RFID tag 2a may also comprise information from which a specific identity code of the RFID tag 2a can be derived. This allows for the detection of a plurality of RFID tags 2a.

In an alternative embodiment the RFID tag 2a does not actively transmit a response signal, but instead it changes the absorption of the RF signal in a specific way and thereby changes the antenna load of the activated antenna sensor 1A - 1H. The specific change of the antenna load by the RFID tag 2a is a measure for the specific identity code of the RFID tag 2a.

A tunable capacitor, in which the capacitance value can be set within a specific range, is normally used for setting the operating frequency of the activated antenna sensor 1A - 1H. However, the antenna sensors 1A - 1H that surround the activated antenna sensor 1A - 1H provide for an additional parasitic, and unwanted, capacitor between the active antenna sensor 1A - 1H and the surrounding, in this case not activated, antenna sensors 1A - 1H which influences the capacitance value of the activated antenna sensor 1A - 1H and hence influences the tuning of the activated antenna sensor 1A - 1H to the operating frequency. The value of the additional parasitic capacitance depends on the properties of the antenna sensors 1A - 1H that are in the neighborhood of the activated antenna sensor 1A - 1H, such as for example their internal capacitance value which is variable because these antenna sensors 1A - 1H also become activated by tuning their capacitance value during the scanning process. The influence becomes even more pronounced in case the arrangement of the antenna sensors 1A - 1H is such that the antenna sensors 1A - 1H overlap each other, as is for example shown in the arrangement of Fig. 1. The mutual influence or cross-talk between the activated antenna sensor 1A - 1H and the surrounding passive antenna sensors 1A - 1H is reduced significantly in case the passive antenna sensors 1A - 1H are tuned to a resonance frequency which is different than the operating frequency. In that case the tuning range of the capacitance value of the tunable capacitor for setting the operation frequency is negligible with respect to the capacitance value required to set the resonance frequency, and hence the mutual influence of the activated and the passive antenna sensors 1A - 1H is considerably reduced. Preferably the second frequency is at least a factor of two lower than the specific frequency for an optimum reduction of the mutual influence of the activated and the passive antenna sensors 1A - 1H. In a practical example the specific frequency is tuned around 13.56 MHz and the second frequency is set to approximately 3.6 MHz.

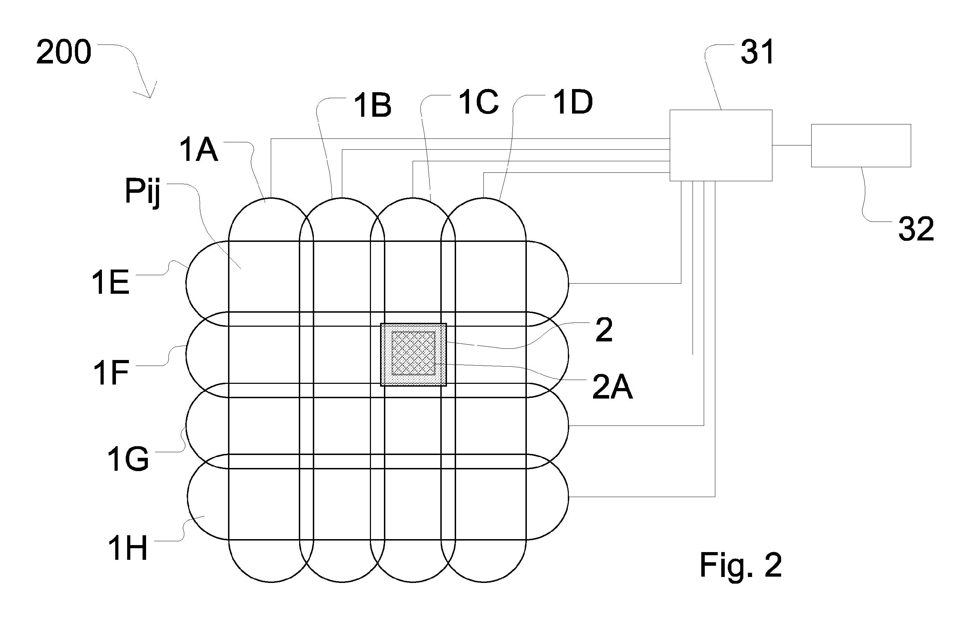

Fig. 2 shows a schematic view of a practical embodiment of a system 200 for sensing an RFID tag 2a according to the invention. A multiplexer 31 provides for the scanning process by activating the antenna sensors 1A - 1H in a required sequence. At the same time the multiplexer 31 provides that the passive antenna sensors 1A - 1H are provided with the resonance frequency. The multiplexer 31 furthermore receives the detection signal and transmits this detection signal to a detector 32. The detector 32 may have an internal processor that processes the detection signals which results in the localization of the RFID tag 2a and the corresponding token 2 in the sensing area 100.

In summary, a system for sensing an RFID tag allocated to at least one scanning position is provided comprising RF sensors, at least one which RF sensors is in a detection state for detecting the RFID tag within sensing regions while the other RF sensors are in a passive state, which sensing regions are arranged such that each of the sensing regions covers at least one scanning position, wherein the RF sensor in the detection state transmits a first RF signal at a first frequency and the other RF sensors in the passive state are resonating at a second frequency that is different from the first frequency.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of other elements or steps than those listed in a claim. The word "a" or "an" preceding an element does not exclude the presence of a plurality of such elements.

## Claims

1. A system for sensing an RFID tag (2a) allocated to at least one scanning position (Pij) comprising RF sensors (1A-1H), at least one which RF sensors (1A-1H) is in a detection state for detecting the RFID tag (2a) within sensing regions while the other RF sensors (1A-1H) are in a passive state, which sensing regions are arranged such that each of the sensing regions covers at least one scanning position (Pij), wherein the RF sensor (1A-1H) in the detection state transmits a first RF signal at a first frequency and the other RF sensors (1A-1H) in the passive state are resonating at a second frequency that is different from the first frequency.

2. A system for sensing an RFID tag (2a) as claimed in claim 1, in which the second frequency is at least a factor two lower than the first frequency.

3. A system for sensing an RFID tag (2a) as claimed in claim 1, in which the sensing regions are superposed on one another in at least one scanning position (Pij) such that each scanning position (Pij) is scanned by a unique pattern of sensing regions.

4. A system for sensing an RFID tag (2a) as claimed in claim 1, in which at least two distant RF sensors (1A-1H) are set to the detection state.

5. A system for sensing an RFID tag (2a) as claimed in claim 1, in which the RF sensors (1A-1H) are configured as antennas designed for reading identity codes of the RFID tag (2a).

6. A system for sensing an RFID tag (2a) as claimed in claim 1, in which a detection signal from the RF sensor (1A-1H), that is in the detection state, is transmitted to a detector (32) that is adapted to allocate each detection signal to a different digit of a position code.

7. A system for sensing an RFID tag (2a) as claimed in claim 6, in which the first RF signal and the second RF signal are provided by a multiplexer (31) and in which the detection signal is transmitted to the multiplexer (31) and the output of the multiplexer (31) is transmitted to the detector (32).

8. A system for sensing an RFID tag (2a) as claimed in claim 1 or 2, in which the first frequency is tunable.

9. A system for sensing an RFID tag (2a) as claimed in claim 7, in which the first, tunable frequency is around 13.56 MHz and the second frequency is about 3.6 MHz.

10. A method for sensing an RFID tag (2a) allocated to at least one scanning position (Pij), the method comprising the steps of
- providing sensing regions arranged such that each of the sensing regions covers at least one scanning position (Pij);
- providing RF sensors (1A-1H);
- setting at least one RF sensor (1A-1H) in a detection state for detecting the RFID tag (2a) within the sensing regions;
- setting the other RF sensors (1A-1H) in a passive state;
- repeating the step of setting at least one RF sensor (1A-1H) in the detection state for each RF sensor (1A-1H) while the other RF sensors (1A-1H) are set to the passive state;
wherein the RF sensor (1A-1H) in the detection state transmits a first RF signal at a first frequency and the other RF sensors (1A-1H) that are in the passive state are brought into resonance at a second frequency that is different from the first frequency.
